# EUROPÄISCHE PATENTSCHRIFT

(11) **EP 4 204 795 B1**
(45) Veröffentlichungstag und Bekanntmachung des Hinweises auf die Patenterteilung: **13.08.2025**
(21) Anmeldenummer: 21815418.5
(22) Anmeldetag: 15.11.2021
(51) Int. Cl.: G01N 21/90

(54) **VERFAHREN UND VORRICHTUNG ZUM INSPIZIEREN VON BEHÄLTNISSEN MIT STAUBEINBLASUNG**
METHOD AND DEVICE FOR INSPECTING CONTAINERS, COMPRISING THE BLOWING-IN OF DUST
PROCÉDÉ ET DISPOSITIF D'INSPECTION DE RÉCIPIENTS COMPRENANT L'INSUFFLATION DE POUSSIÈRE

(30) Priorität: 23.11.2020 DE 102020130939
(43) Veröffentlichungstag der Anmeldung: 05.07.2023
(73) Patentinhaber: Krones AG, 93073 Neutraubling (DE)
(72) Erfinder: MERL, Ulrich, 93073 Neutraubling (DE); SOELLNER-WEIN, Gertrud, 93073 Neutraubling (DE); HAUSLADEN, Josef, 93073 Neutraubling (DE); SÖLLNER, Jürgen, 93073 Neutraubling (DE)
(74) Vertreter: Hannke Bittner & Partner mbB Regensburg
(86) Internationale Anmeldenummer: PCT/EP2021/081748
(87) Internationale Veröffentlichungsnummer: WO 2022/106372

(56) Entgegenhaltungen:
- DE-A1- 102011 083 037
- US-A- 3 989 380

## Beschreibung

Die vorliegende Erfindung bezieht sich auf ein Verfahren und eine Vorrichtung zum Inspizieren von Behältnissen und insbesondere von Kunststoffvorformlingen und insbesondere von transparenten Kunststoffvorformlingen.

Aus dem Stand der Technik ist es bekannt, dass Kunststoffvorformlinge erwärmt werden, und in diesem erwärmten Zustand einer Blasformeinrichtung, wie etwa einer Blasformmaschine zugeführt werden, um von dieser zu Kunststoffflaschen expandiert zu werden. Dabei ist es auch bekannt, dass derartige Kunststoffvorformlinge transparent sind und dass allgemein transparente Kunststoffvorformlinge und andere Behältnisse typischerweise mit optischen Verfahren inspiziert werden, wobei diese Verfahren darauf abzielen, Rückstände, Fremdstoffe usw. zu detektieren, die sich optisch unterscheidbar vom Hintergrund bzw. dem transparenten Grundmaterial absetzen. DE 10 2011 083037 A1 und US 3 989 380 offenbaren Verfahren und Vorrichtungen zum Inspizieren von Behältnissen.

Weitere Merkmale, wie Größe, Menge, Material und diese Fremdstoffe spielen eine erhebliche Rolle dabei, wie sich diese Art von Fremdstoffen erkennen lassen.

Teilweise tritt nach dem Stand der Technik der Nachteil auf, dass flüssige oder hochviskose transparente bzw. zumindest in dünnen Schichten teilweise transparente Fremdstoffe kaum oder gar nicht erkannt werden. Ein typisches Beispiel sind ölige oder wässrige Verunreinigungen, die partikelbindende, klebrige Eigenschaften haben. Der vorliegenden Erfindung liegt daher die Aufgabe zugrunde, die Möglichkeiten zum Inspizieren auch solcher Behältnisse zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Inspizieren von Behältnissen werden zunächst unbefüllte Behältnisse zur Verfügung gestellt. In diese unbefüllten Behältnisse wird eine pulverförmige Substanz in einen Innenraum der Behältnisse eingebracht. Anschließend erfolgt eine optische Inspektion des Behältnisses mittels einer Inspektionsvorrichtung.

Die Erfindung geht also dabei davon aus, dass zumindest eine Inspektion dieser pulverförmigen Substanz möglich ist, diese an den Innenwänden der Behältnisse, wie der Kunststoffvorformlinge, haften bleibt. Auf diese Weise kann auf das Vorhandensein entsprechender fließförmiger Substanzen oder allgemein unerwünschter Substanzen innerhalb der Behältnisse geschlossen werden.

Die Zufuhr von pulvrigen Substanzen bzw. von Stäuben mit bestimmten Eigenschaften führt zu dem Phänomen einer verstärkten Partikelbildung an verschmutzten Zonen des Behältnisses und dazu, dass diese Zonen optisch leichter unterscheidbar werden von angrenzenden Zonen. Insbesondere lässt sich eine derartige Partikelbildung an den Wandungen der Behältnisse und insbesondere an denjenigen Wandungen, welche später expandiert werden feststellen.

Bei einem bevorzugten Verfahren ist das Volumen der in den Innenraum der Behältnisse eingebrachten Substanz geringer ist als 40 % des Innenraums des Behältnisses, bevorzugt geringer als 30 % des Innenraums, bevorzugt geringer als 20 % des Innenraums, bevorzugt geringer als 10 % des Innenraums, bevorzugt geringer als 5 % des Innenraums. Dies bedeutet, dass im Vergleich zu dem Innenraum des Behältnisses nur eine sehr geringe Menge an pulvriger Substanz eingebracht wird.

Damit handelt es sich bei der pulvrigen Substanz insbesondere nicht um ein Füllgut, mit dem die Behältnisse befüllt werden sollen, sondern um eine Testsubstanz, die bevorzugt entweder wieder zumindest zum Teil aus dem Behältnis entfernt werden soll oder aber die gemeinsam mit dem Behältnis, in welches sie eingefüllt wurde ausgeschleust werden soll.

Dabei wäre es bereits möglich, einen manuellen Test mit dem menschlichen Auge durchzuführen. Die Idee liegt jedoch hier darin, ein automatisiertes Inspektionsverfahren vorzuschlagen, bei dem mögliche Vorgehensweisen denkbar sind.

Bei einer bevorzugten Ausführungsform fördert daher eine Transporteinrichtung die Behältnisse zu einer Einbringstation, welche die pulvrige Substanz in die Behältnisse einbringt und/oder eine Transporteinrichtung fördert die Behältnisse mit der darin eingebrachten pulvrigen Substanz zu der Inspektionsvorrichtung.

Dabei können auch mehrere Transporteinrichtungen vorgesehen sein, welche die Behältnisse in den einzelnen Transportabschnitten transportieren. So kann beispielsweise eine erste Transporteinrichtung, welche die Behältnisse zu der Einbringeinstation fördert aus einer Gruppe von Transporteinrichtungen ausgewählt sein, welche Kettenförderer, Sortierrollen, Förderschienen, Transportsterne, Transportscheiben, linearmotorische Transporteinrichtungen und dergleichen enthält. Bevorzugt fördert diese Transporteinrichtung dabei die Behältnisse, bei denen es sich insbesondere um Kunststoffvorformlinge handelt, vereinzelt.

Eine weitere Transporteinrichtung kann die Behältnisse von der Einbringstation zu der Inspektionseinrichtung transportieren. Auch diese Transporteinrichtung kann dabei aus einer Gruppe von Transporteinrichtungen ausgewählt sein, welche Kettenförderer, Sortierrollen, Förderschienen, Transportsterne, Transportscheiben, linearmotorische Transporteinrichtungen und dergleichen enthält.

Die Transporteinrichtungen können dabei Greifelemente zum Greifen der Behältnisse aufweisen. Bei einer bevorzugten Ausführungsform bewegt sich die Einbringstation mit den Behältnissen während deren Transport mit. So kann beispielsweise die Einbringstation auf einem beweglichen und insbesondere drehbaren Träger angeordnet sein. Auch wäre es denkbar, dass eine Vielzahl derartiger Einbringstationen auf einem derartigen beweglichen Träger angeordnet sind.

Bevorzugt werden die Behältnisse auf von der Inspektionseinrichtung mit Hilfe einer Transporteinrichtung weiter transportiert. Auch diese Transporteinrichtung sowie ggfs. auch weitere Transporteinrichtung kann aus einer Gruppe von Transporteinrichtungen ausgewählt sein, welche Kettenförderer, Sortierrollen, Förderschienen, Transportsterne, Transportscheiben, linearmotorische Transporteinrichtungen und dergleichen enthält.

Es wäre jedoch auch möglich, dass die Einbringstation entlang des Transportpfads der Behältnisse stationär angeordnet ist und die Behältnisse an dieser Einbringstation vorbeitransportiert werden.

Bei dem erfindungsgemäßen Verfahren inspiziert die Inspektionsvorrichtung eine Wandung der Behältnisse dahingehend, ob an diesen Wandungen pulvrige Substanz haftet. Dies kann, wie oben erwähnt, als Indiz dazu dienen, dass in dem Behältnis ein Material, welches nicht sichtbar ist, vorhanden war, welches jedoch dazu führt, dass die pulvrige Substanz an diesem anklebt. Damit kann aus dem Vorhandensein dieser pulvrigen Substanz an den Wandungen der Behältnisse darauf geschlossen werden, dass sich in diesen Behältnissen eine (unerwünschte) Substanz befindet.

Bei einem bevorzugten Verfahren handelt es sich bei den Behältnissen um Kunststoffbehältnisse. Es wäre jedoch auch möglich, dass hier beschriebene Verfahren auf andere Materialien anzuwenden. So könnte es sich bei den Behältnissen auch um Glasbehältnisse handeln. Bei einem weiteren bevorzugten Verfahren handelt es sich bei den Behältnissen um Kunststoffvorformlinge.

Besonders bevorzugt handelt es sich bei dem Material der Behältnisse um ein wenigstens teilweise und bevorzugt vollständiges transparentes Material und insbesondere um für Licht im sichtbaren Spektralbereich transparentes Material.

Bei einer weiteren bevorzugten Ausführungsform wird die pulverförmige Substanz in den Innenraum der Behältnisse eingeblasen. Auf diese Weise wird eine Verteilung der Substanz in dem Innenraum der Behältnisse erreicht und bevorzugt auch ein gleichmäßiges Anhaften an der Innenwandung der Behältnisse.

Bevorzugt werden Einblasdüse und Rückluftkanal formschlüssig bzw. abdichtend auf die Behältermündung aufgesetzt.

Besonders bevorzugt wird der Teststaub mit der Energie eingespült, die ohne die beschriebenen Anhaftungen ausreicht, dass bevorzugt kein oder nur minimal Teststaub im Behältnis verbleibt.

Bei einer weiteren bevorzugten Ausführungsform handelt es sich bei der pulverförmigen Substanz um Korund oder eine Substanz, welche Korund enthält. Korund zeichnet sich dadurch aus, dass es eine sehr harte Härte aufweist.

Bei einem weiteren bevorzugten Verfahren weist die pulverförmige Substanz eine Partikelgröße auf, die wenigstens 10 µm, bevorzugt wenigstens 30 µm, bevorzugt wenigstens 50 µm beträgt. Bei einer weiteren bevorzugten Ausführungsform weist die pulverförmige Substanz eine Partikelgröße auf, die geringer ist al 400 µm, bevorzugt geringer als 300 µm, bevorzugt geringer als 200 µm und besonders bevorzugt geringer 150 µm. Derartige Partikelgrößen haben sich als günstig erwiesen, um in leicht feststellbarer Weise an der Innenwandung der Kunststoffbehältnisse zu haften.

Bei einer weiteren bevorzugten Ausführungsform ist die pulvrige Substanz lebensmittelverträglich. Dies ist bedeutsam, da auch in einem weiteren Verfahren nicht ausgeschlossen werden kann, dass gegebenenfalls geringe Rückstände der Substanz in den Behältnissen verbleiben.

Bei einem weiteren bevorzugten Verfahren werden die mit der pulverförmigen Substanz beaufschlagten Behältnisse ausgesondert oder gereinigt. So ist es beispielsweise möglich, dass die pulvrige Substanz oder der Teststaub in einen Teil der Behältnisse eingeblasen wird, die nach der automatischen, optischen Inspektion verworfen werden müssen, weil sie sich auch im Falle eines Gut-Resultats der Teststaub in einem nachfolgenden Entstauber nicht vollständig entfernen lässt.

In diesem Falle werden gewissermaßen Stichproben durchgeführt und geprüft, ob beispielsweise innerhalb einer bestimmten Marge an Kunststoffvorformlingen solche mit Substanzen verunreinigten Vorformlinge vorhanden sind.

Bei einem anderen Verfahren wird ein Teststaub in jedes Behältnis eingeblasen, um gesteuert von der Inspektion nur die verschmutzten Behältnisse aus zu schleusen, wobei besonders bevorzugt die pulvrige Substanz in einen nachfolgenden Entstaubungsschritt ausreichend gut entfernt werden kann.

Bei diesem Verfahren findet daher eine Überprüfung sämtlicher Kunststoffvorformlinge bzw. Behältnisse statt, und es findet eine anschließende Reinigung statt.

Die vorliegende Erfindung ist weiterhin auf eine Vorrichtung zum Inspizieren von Behältnissen gerichtet, welche eine Transporteinrichtung aufweist, welche die Behältnisse entlang eines vorgegebenen Transportpfads transportiert sowie eine Einbringeinrichtung, welche eine pulvrige Substanz in die Behältnisse einbringt sowie eine entlang des Transportpfads nach der Einbringeinrichtung angeordnete Inspektionseinrichtung, welche die die pulvrige Substanz beinhaltenden Behältnisse inspiziert, wobei die Inspektionseinrichtung eine Wandung der Behältnisse dahingehend inspiziert, ob an diesen Wandungen pulvrige Substanz haftet.

Es wird daher auch vorrichtungsseitig vorgeschlagen, dass zunächst mittels einer Einbringeinrichtung eine pulvrige Substanz, insbesondere ein Staub, in die Behältnisse eingebracht, beispielsweise eingeblasen wird und diese anschließend inspiziert werden. Die Inspektionsvorrichtung dient daher zu dem Zweck, die mit der pulvrigen Substanz versehenen Behältnisse zu inspizieren und zu überprüfen, ob gewisse Oberflächenbereiche mit der pulvrigen Substanz beaufschlagt sind, insbesondere die Umfangswandungen der Behältnisse, um so auf das Vorhandensein einer unerwünschten Substanz im Inneren der Behältnisse rückzuschließen.

Bei einer weiteren bevorzugten Ausführungsform weist die Vorrichtung eine Herstellungseinrichtung zum Herstellen der Behältnisse auf. Alternativ kann auch eine Aufbewahrungseinrichtung zum Aufbewahren der Behältnisse vorgesehen sein.

Bei einer weiteren bevorzugten Ausführungsform weist die Vorrichtung eine entlang des Transportpfads nach der Inspektionseinrichtung angeordnete Ausschleuseeinrichtung auf, welche zum Ausschleusen von Behältnissen aus einem Behältnisstrom geeignet und bestimmt ist. Dabei ist es möglich, dass sämtliche fehlerhaften Behältnisse ausgeschleust werden, wobei dies insbesondere in Reaktion auf ein Ergebnis der Inspektionseinrichtung erfolgt. Auch wäre es möglich, dass die Ausschleuseeinrichtung alle mit der pulvrigen Substanz beaufschlagten Behältnisse ausschleust.

Bei einer weiteren bevorzugten Ausführungsform weist die Einbringeinrichtung eine Düse auf, welche ein Pulver einbläst. Besonders bevorzugt weist die Einbringeinrichtung ein Reservoir auf, in welchem die pulvrige Substanz angeordnet ist. Weiterhin kann die Einbringeinrichtung Elemente, wie beispielsweise Siebe und dergleichen, aufweisen, welche bewirken, dass die pulvrige Substanz in einer feinen Körnung in die Kunststoffbehältnisse gelangt.

Bei einer weiteren bevorzugten Ausführungsform handelt es sich bei der Inspektionseinrichtung um eine optische Inspektionseinrichtung. Bevorzugt inspiziert die Inspektionseinrichtung die Behältnisse in einem Auflichtverfahren oder in einem Durchlichtverfahren. Bevorzugt wird eine Aufnahme vor dem Einblasen (bzw. allgemein dem Einbringen) sowie nach dem Einblasen (bzw. allgemein dem Einbringen) vorgenommen. Somit sind Veränderungen (in der Anmutung bzw. des Ergebnisses der Einblasung) besonders effizient zu beurteilen. Besonders bevorzugt handelt es sich bei einer Auflichtinspektion um eine Farbaufnahme.

Bevorzugt inspiziert die Inspektionseinrichtung die Behältnisse während deren Transport. Bevorzugt werden die Behältnisse individualisiert. Auf diese Weise ist bevorzugt eine gezielte Ausschleusung bestimmter Behältnisse möglich.

Besonders bevorzugt handelt es sich bei der Einbringeinrichtung um eine Pulverdosiereinrichtung. Bevorzugt gibt eine derartige Einbringeinrichtung und insbesondere eine Pulverdosiereinrichtung eine pulverförmige Substanz in einen Gasmassenstrom und insbesondere einen (Steril)luftmassenstrom ein.

Bevorzugt ist die Einbringeinrichtung bzw. die Pulverdosiereinrichtung derart ausgebildet, dass die Einbringung der pulverförmigen Substanz intermittierend und/oder in vorgegebenen Zeiträumen erfolgen kann. So ist es beispielsweise möglich, dass die pulverförmige Substanz intermittierend und/oder in vorgegebenen Zeiträumen in den Gasmassenstrom eingegeben wird. Daneben oder zusätzlich wäre es auch möglich, dass der Gasmassenstrom intermittierend und/oder in vorgegebenen Zeiträumen betrieben wird.

Auf diese Weise ist es möglich, dass nur in einzelne Kunststoffvorformlinge die pulverförmige Substanz eingebracht wird.

Bevorzugt ist das von der Einbringeinrichtung verwendete Gas aus einer Gruppe von Gasen ausgewählt, welche CO₂, N₂, Luft, Sterilluft, gasförmige Desinfektionsmittel, Mischungen hieraus und dergleichen enthält.

Alternativ wäre auch denkbar in einem ersten Schritt Pulver mechanisch in einen (insbesondere hängenden) Kunststoffvorformling fallen zu lassen und in einem zweiten Schritt, bevorzugt mit einem geringem Luftimpuls, die Verteilung auf der Innenoberfläche des Preforms zu erzeugen. In einem optionalen dritten Schritt kann optisch ausgewertet werden um dann bevorzugt in einem optionalen vierten Schritt mit einem gasförmigen oder flüssigem Reinigungsschritt zu spülen.

Bevorzugt sind die pulvrige Substanz und/oder das Spülmedium kompatibel zu dem späteren Abfüllgut, wobei unter kompatibel verstanden wird, dass sich die pulvrige Substanz insbesondere nicht auf vorgegebene Eigenschaften des Füllguts auswirkt wie etwa dessen Haltbarkeit oder dessen Geschmack. Weiterhin kann es sich bei dem Spülmedium auch um ein gasförmiges Spülmedium handelt.

Weitere Vorteile und Ausführungsformen ergeben sich aus der beigefügten Zeichnung.

Darin zeigt:

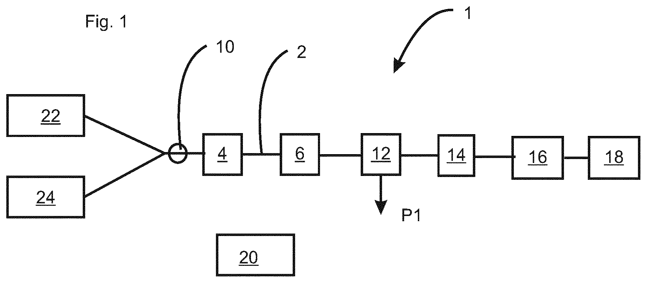

- Fig. 1: eine blockdiagrammartige Darstellung einer erfindungsgemäßen Vorrichtung.

Fig. 1 zeigt eine blockdiagrammartige Darstellung einer erfindungsgemäßen Vorrichtung 1 zum Inspizieren von Behältnissen 10. Dabei bezieht sich das Bezugszeichen 22 auf eine Vorrichtung zum Herstellen von Kunststoffvorformlingen, etwa eine Spritzformmaschine. Die in dieser Vorrichtung gefertigten Kunststoffvorformlinge können über eine Transporteinrichtung zu der Einbringeinrichtung 4 gefördert werden.

Alternativ ist es auch möglich, dass Kunststoffvorformlinge in einer Aufbewahrungseinrichtung 24, wie etwa einem Behälter aufbewahrt und von dort ebenfalls zu der Einbringeinrichtung 4 befördert werden.

Das Bezugszeichen 2 kennzeichnet grob schematisch eine Transporteinrichtung, welche die Kunststoffvorformling hier von der Einbringeinrichtung einer Inspektionseinrichtung transportiert. Die Vorrichtung 1 weist hier eine Vielzahl solcher Transporteinrichtungen auf, welche die Kunststoffvorformlinge oder allgemein die Behältnisse von einer Station zu einer weiteren Station fördern.

In der Einbringeinrichtung wird ein Staub in die Behältnisse eingebracht. Dabei kann die Einbringeinrichtung beispielsweise eine Düse aufweisen, welche eine bestimmte Menge einer pulvrigen Substanz in die Behältnisse einbläst.

Die mit der pulvrigen Substanz beaufschlagten Behältnisse 10 werden nun von der Einbringeinrichtung zu der Inspektionseinrichtung gefördert. Diese inspiziert die Behältnisse optisch und kann feststellen, wenn sich pulverförmige Substanz an den Innenoberflächen der Behältnisse niedergeschlagen hat.

Das Bezugszeichen 12 kennzeichnet eine Ausschleuseeinrichtung zum Ausschleusen bestimmter Behältnisse aus dem Produktstrom, wie durch den Pfeil P1 angedeutet. Dabei ist es möglich, dass alle Behältnisse, in welche pulverförmige Substanz eingebracht wurde ausgeschleust werden. Es ist jedoch auch möglich, dass nur diejenigen Behältnisse ausgeschleust werden, welche als fehlerhaft erkannt wurden, beispielsweise diejenigen Behältnisse, bei denen die Inspektionseinrichtung feststellt, dass sie an ihrer Innenwandung Ablagerungen der pulvrigen Substanz aufweisen.

Das Bezugszeichen 14 kennzeichnet eine Reinigungseinrichtung, wie beispielsweise eine Ausblaseinrichtung, welche die pulvrige Substanz aus den Behältnissen entfernt. Dabei kann die pulvrige Substanz beispielsweise aus den Behältnissen ausgeblasen werden. Auch ist es denkbar, dass die Behältnisse zum Zwecke dieser Reinigung gewendet werden und beispielsweise mit der Mündung nach unten transportiert werden.

Daneben kann die Reinigung auch mittels einer Flüssigkeit erfolgen.

Das Bezugszeichen 16 kennzeichnet eine Erwärmungseinrichtung zum Erwärmen der Kunststoffvorformlinge und das Bezugszeichen 18 eine Umformungseinrichtung zum Umformen der Kunststoffvorformlinge zu Kunststoffbehältnissen.

Das Bezugszeichen 20 kennzeichnet eine Steuerungseinrichtung zum Steuern der gesamten Anlage. Diese Steuerungseinrichtung 20 kann dabei beispielsweise die Ausschleuseeinrichtung dahingehend ansteuern, dass diese bestimmte Behältnisse 10 aus dem Produktstrom ausschleust.

Anders als in Fig 1 dargestellt wäre es auch möglich, dass die Einbringeinrichtung in einem separaten Transportzweig angeordnet ist und sämtliche Behältnisse, welche die Einbringeinrichtung passieren, anschließend ausgeschleust werden.

### Bezugszeichenliste

- 1: Vorrichtung
- 2: Transporteinrichtung
- 4: Einbringeinrichtung
- 6: Inspektionseinrichtung
- 10: Behältnis
- 12: Ausschleuseinrichtung
- 14: Reinigungseirnichtung, Ausblaseinrichtung
- 16: Erwärmungseinrichtung
- 18: Umformungseinrichtung

## Patentansprüche

1. Verfahren zum Inspizieren von Behältnissen (10) mit den Schritten:
- Zur Verfügung-Stellen von unbefüllten Behältnissen (10);
- Einbringen einer pulverförmigen Substanz in einen Innenraum der Behältnisse
- Inspektion und insbesondere optische Inspektion des Behältnisses mittels einer Inspektionsvorrichtung (6), wobei
die Inspektionseinrichtung (4) eine Wandung der Behältnisse (10) dahingehend inspiziert, ob an diesen Wandungen pulvrige Substanz haftet,

2. Verfahren nach Anspruch 1,
**dadurch gekennzeichnet, dass**
das Volumen der in den Innenraum der Behältnisse (10) eingebrachten Substanz geringer ist als 20 % des Innenraums des Behältnisses (10).

3. Verfahren nach wenigstes einem der vorangegangenen Ansprüche,
**dadurch gekennzeichnet, dass**
eine Transporteinrichtung (2) die Behältnisse zu einer Einbringstation (4) fördert, welche die pulvrige Substanz in die Behältnisse einbringt und/oder eine Transporteinrichtung (2) die Behältnisse mit der darin eingebrachten pulvrigen Substanz zu der Inspektionsvorrichtung (6) fördern.

4. Verfahren nach wenigstens einem der vorangegangenen Ansprüche,
**dadurch gekennzeichnet, dass**
die Behältnisse Kunststoffbehältnisse (10) und insbesondere Kunststoffvorformlinge (10) sind.

5. Verfahren nach wenigstens einem der vorangegangenen Ansprüche,
**dadurch gekennzeichnet, dass**
die pulverförmige Substanz in den Innenraum der Behältnisse (10) eingebracht und insbesondere eingeblasen wird.

6. Verfahren nach wenigstens einem der vorangegangenen Ansprüche,
**dadurch gekennzeichnet, dass**
die pulverförmige Substanz Korund ist oder Korund enthält.

7. Verfahren nach wenigstens einem der vorangegangenen Ansprüche,
**dadurch gekennzeichnet, dass**
die pulverförmige Substanz eine Partikelgröße von wenigstes 10 µm, bevorzugt von wenigstens 30 µm, und bevorzugt von wenigstens 50 µm aufweist und/oder dass die pulverförmige Substanz eine Partikelgröße von höchstens 400 µm, bevorzugt von höchstens 300 µm, bevorzugt von höchstens 200 µm, und besonders bevorzugt von höchstens 150 µm aufweist.

8. Verfahren nach wenigstens einem der vorangegangenen Ansprüche,
**dadurch gekennzeichnet, dass**
die mit der pulverförmigen Substanz beaufschlagten Behältnisse (10) ausgesondert und/oder gereinigt werden.

9. Vorrichtung zum Inspizieren von Behältnissen (10) mit einer Transporteinrichtung (2), welche die Behältnisse (10) entlang eines vorgegebenen Transportpfads transportiert, mit einer Einbringeinrichtung (4), welche eine pulvrige Substanz in die Behältnisse einbringt, mit einer entlang des Transportpfads nach der Einbringeinrichtung (4) angeordneten Inspektionseinrichtung (6), welche die die pulvrige Substanz beinhaltenden Behältnisse inspiziert, wobei die Inspektionseinrichtung (4) eine Wandung der Behältnisse (10) dahingehend inspiziert, ob an diesen Wandungen pulvrige Substanz haftet.

10. Vorrichtung nach dem vorangegangenen Anspruch,
**dadurch gekennzeichnet, dass**
die Vorrichtung eine entlang des Transportpfads nach der Inspektionseinrichtung (6) angeordnete Ausschleuseeinrichtung (12) aufweist, welche zum Ausschleusen von Behältnissen aus einem Behältnisstrom geeignet ist.

11. Vorrichtung nach wenigstens einem der vorangegangenen Ansprüche 9 - 10,
**dadurch gekennzeichnet, dass**
die Einbringeinrichtung eine Pulverdosiereinrichtung ist.

## Claims

1. A method of inspecting containers (10) comprising the steps of:
- Providing unfilled containers (10);
- Introduction of a powdery substance into an interior of the containers;
- Inspection and in particular optical inspection of the container by an inspection device (6), wherein
the inspection device (4) inspects a wall of the containers (10) to determine whether powdery substance is adhering to these walls.

2. Method according to claim 1,
**characterized in that**
the volume of the substance introduced into the interior of the container (10) is less than 20 % of the interior of the container (10).

3. Method according to at least one of the preceding claims,
**characterized in that**
a transport device (2) conveys the containers to an introduction station (4) which introduces the powdery substance into the containers and/or a transport device (2) conveys the containers with the powdery substance introduced therein to the inspection device (6).

4. Method according to at least one of the preceding claims,
**characterized in that**
the containers are plastic containers (10) and in particular plastic preforms (10).

5. Method according to at least one of the preceding claims,
**characterized in that**
the powdery substance is introduced into the interior of the containers (10) and in particular blown in.

6. Method according to at least one of the preceding claims,
**characterized in that**
the powdery substance is corundum or contains corundum.

7. Method according to at least one of the preceding claims,
**characterized in that**
the powdery substance has a particle size of at least 10 µm, preferably of at least 30 µm and preferably of at least 50 µm and/or that the powdery substance has a particle size of at most 400 µm, preferably of at most 300 µm, preferably of at most 200 µm and particularly preferably of at most 150 µm.

8. Method according to at least one of the preceding claims,
**characterized in that**
the containers (10) applied with the powdery substance are separated and/or cleaned.

9. Apparatus for inspecting containers (10) with a transport device (2) which transports the containers (10) along a predetermined transport path, with an introduction device (4) which introduces a powdery substance into the containers, with an inspection device (6) which is arranged along the transport path after the insertion device (4) and which inspects the containers containing the powdery substance, wherein the inspection device (4) inspecting a wall of the containers (10) to determine whether powdery substance is adhering to these walls.

10. Apparatus according to the preceding claim,
**characterized in that**
the apparatus has an ejection device (12) arranged along the transport path after the inspection device (6), which is suitable for ejecting containers from a container stream.

11. Apparatus according to at least one of the preceding claims 9 - 10, **characterized in that**
the introduction device is a powder dosing device.

## Revendications

1. Procédé d'inspection de récipients (10) avec les étapes suivantes :
- de mise à disposition de récipients non remplis (10) ;
- d'introduction d'une substance pulvérulente dans un espace intérieur des récipients ;
- d'inspection et en particulier d'inspection visuelle du récipient au moyen d'un dispositif d'inspection (6), dans lequel
le système d'inspection (4) inspecte une paroi des récipients (10) pour vérifier si de la substance pulvérulente adhère auxdites parois.

2. Procédé selon la revendication 1,
**caractérisé en ce que**
le volume de la substance introduite dans l'espace intérieur des récipients (10) est inférieur à 20 % de l'espace intérieur du récipient (10).

3. Procédé selon au moins l'une quelconque des revendications précédentes,
**caractérisé en ce que**
un système de transport (2) transporte les récipients vers une station d'introduction (4) qui introduit la substance pulvérulente dans les récipients et/ou un système de transport (2) transporte les récipients avec la substance pulvérulente introduite dans ceux-ci vers le dispositif d'inspection (6).

4. Procédé selon au moins l'une quelconque des revendications précédentes,
**caractérisé en ce que**
les récipients sont des récipients en matière plastique (10) et en particulier des préformes en matière plastique (10).

5. Procédé selon au moins l'une quelconque des revendications précédentes,
**caractérisé en ce que**
la substance pulvérulente est introduite et est en particulier soufflée dans l'espace intérieur des récipients (10).

6. Procédé selon au moins l'une quelconque des revendications précédentes,
**caractérisé en ce que**
la substance pulvérulente est du corindon ou contient du corindon.

7. Procédé selon au moins l'une quelconque des revendications précédentes,
**caractérisé en ce que**
la substance pulvérulente présente une taille de particule d'au moins 10 µm, de manière préférée d'au moins 30 µm, et de manière préférée d'au moins 50 µm et/ou que la substance pulvérulente présente une taille de particule de maximum 400 µm, de manière préférée de maximum 300 µm, de manière préférée de maximum 200 µm, et de manière particulièrement préférée de maximum 150 µm.

8. Procédé selon au moins l'une quelconque des revendications précédentes,
**caractérisé en ce que**
les récipients (10) chargés de la substance pulvérulente sont mis de côté et/ou sont nettoyés.

9. Dispositif d'inspection de récipients (10) avec un système de transport (2), qui transporte les récipients (10) le long d'un chemin de transport prédéfini, avec un système d'introduction (4), qui introduit une substance pulvérulente dans les récipients, avec un système d'inspection (6) disposé le long du chemin de transport après le système d'introduction (4), qui inspecte les récipients contenant la substance pulvérulente, dans lequel le système d'inspection (4) inspecte une paroi des récipients (10) pour vérifier si de la substance pulvérulente adhère auxdites parois.

10. Dispositif selon la revendication précédente,
**caractérisé en ce que**
le dispositif présente un système d'éjection (12) disposé le long du chemin de transport après le système d'inspection (6), lequel est adapté pour éjecter des récipients hors d'un flux de récipients.

11. Dispositif selon au moins l'une quelconque des revendications précédentes 9 - 10,
**caractérisé en ce que**
le système d'introduction est un système de dosage de poudre.
